# EUROPÄISCHE PATENTSCHRIFT

(11) **EP 1 661 469 B1**
(45) Veröffentlichungstag und Bekanntmachung des Hinweises auf die Patenterteilung: **21.09.2011**
(21) Anmeldenummer: 05024713.9
(22) Anmeldetag: 11.11.2005
(51) Int. Cl.: A23L 1/31, A23L 1/317, A23P 1/08

(54) **Verfahren und Vorrichtung zum Auftragen eines Überzugs auf Fleischprodukte**
Process and apparatus for coating of meat products
Procédé et dispositif d'enrobage des produits de viande

(30) Priorität: 12.11.2004 DE 102004054735
(43) Veröffentlichungstag der Anmeldung: 31.05.2006
(73) Patentinhaber: OSI EUROPE FOODWORKS GmbH, 89312 Günzburg (DE)
(72) Erfinder: Buchner, Siegfried, 89312 Günzburg (DE)
(74) Vertreter: Winkler, Andreas Fritz Ernst

(56) Entgegenhaltungen:
- EP-A- 1 514 483
- WO-A-00/65937
- WO-A-2004/004472
- DE-A1- 10 017 346
- US-A- 4 199 603
- US-A1- 2004 166 212
- US-B1- 6 261 614
- SIEW WAI LIN: "Crystallisation and melting behaviour of palm kernel oil and related products by differential scanning calorimetry" EUROPEAN JOURNAL OF LIPID SCIENCE AND TECHNOLOGY, Bd. 103, Nr. 11, November 2001 (2001-11), Seiten 729-734, XP002367082 ISSN: 1438-7697

## Beschreibung

Die vorliegende Erfindung betrifft ein Verfahren zum Auftragen eines Überzuges auf vorgeformte Fleischprodukte. Die Erfindung betrifft weiterhin ein Verfahren zur Herstellung und Lagerung tiefgefrorener Fleischprodukte. Die vorliegende Erfindung betrifft weiterhin eine Vorrichtung zur Durchführung des Verfahrens, mit dem die erfindungsgemäße Zusammensetzung auf vorgeformte Fleischprodukte aufgebracht wird. Die Erfindung betrifft zudem eine halbflüssige Zusammensetzung auf Ölbasis zum Auftragen auf Lebensmittelprodukte.

Überzüge bzw. Glasuren auf Ölbasis gibt es in unterschiedlichster Form und Geschmacksrichtungen und auch als Marinaden. In der Fleisch verarbeitenden Industrie werden diese Produkte hauptsächlich zum Marinieren von frischem Fleisch verwendet, das dann als eingelegtes Fleisch (Frischware) vertrieben oder in der Industrie weiter verarbeitet (in der Regel gegart) wird.

Neben den würzenden Eigenschaften des Marinadeauftrags ist eine Verbesserung der sensorischen Eigenschaften durch einen Ölauftrag gegeben. US Patent 6,261,614 B1 beschreibt einen Vorgang zum allseitigen Aufbringen eines Ölauftrages bei dem die Ölzusammensetzung zum Erreichen einer knusprigen Panade eingesetzt wird. Dieses Verfahren wird ausschließlich bei panierten Produkten angewandt, um die Eigenschaften des Produktes nach der Zubereitung zu verbessern. Hierbei wird das Produkt im Tauchbadverfahren mit einem Ölfilm beschichtet, bei dem die genaue Einstellung des Panade-Öl Verhältnisses durch den schrittweisen Einsatz von Ölen/Ölgemischen verschiedener Viskositäten im Tauchbad oder mittels Durchlaufen des Produktes durch einen Ölfilm erfolgt. Die Öle liegen bei einer Temperatur von 0°C zwar zähflüssig, aber nicht ausgehärtet vor. Ein würzender Effekt wird in dieser Erfindung nicht offenbart.

Die US Patentschrift 4,199,603 bezieht sich ausschließlich auf die Herstellung eines ofen- oder mikrowellentauglichen Produktes, bei dem der Ölauftrag zur Verbesserung der Textur nach dem Garprozess eingesetzt wird. Hauptaugenmerk liegt hierbei auf der Verwendung von feuchtigkeitsabsorbierenden Zusätzen im Ölgemisch, um ein Aufweichen der Panade während der Zubereitung beim Konsumenten durch austretende Produktfeuchte zu verhindern.

Ein Auftrag auf das Produkt wird auch hierbei allseitig, und bevorzugt durch das Sprühverfahren erreicht. Diese Erfindung setzt den gefrorenen Zustand des Produktes voraus. Die Ölzusammensetzung liegt bei Verarbeitungstemperatur (21 °C) flüssig vor.

Beispielsweise wurde seit Langem das sogenannte Durchlaufmarinieren als eine ideale Möglichkeit angesehen, Fleischstücke direkt nach dem Portionieren zu marinieren und zur Verpackung oder anderen nachfolgenden Produktionsschritten bereitzustellen. Es kann sich hierbei um beliebige Lebensmittel handeln, beispielsweise Fleisch und Fleischprodukte, wie insbesondere Fleischscheiben, z. B. aber auch Hähnchenflügel oder Fleischwürfel.

Auch können Fleischstücke in Mischtrommeln mariniert werden. Dies hat jedoch zwei entscheidende Nachteile. Zum einen werden die Fleischstücke stark mechanisch belastet und es besteht die Gefahr, dass Stücke weggerissen werden. Zum anderen ist dieser Vorgang personalaufwändig, da die Scheiben danach einzeln aussortiert, und in die Verpackung gelegt oder für die weitere Verarbeitung bereitgestellt werden müssen. Andererseits ist dieser Vorgang nicht kontinuierlich. Es müssen erst bestimmte Mengen portioniert werden und nach dem Marinieren dauert es einige Zeit, bis die gesamte Menge verarbeitet ist. Dies führt zu einer bakteriologisch nachteiligen Erwärmung.

Auch kann es beim Einsatz solcher Mischtrommeln dazu kommen, dass durch ein einziges bakteriologisch nicht einwandfreies Stück Lebensmittel, die gesamte Charge kontaminiert und damit unbrauchbar wird. Ebenso werden eventuelle Fremdkörper oder Verunreinigungen während dieser Prozesse gleichmäßig im Produkt verteilt und stellen für die Detektierung ein größeres Problem dar.

Bisherige, kontinuierliche Marinieranlagen haben ein Unterband und ein Oberband. Beide Bänder sind mit vielen Umlenkrollen und Führungsteilen ausgestattet. Das Unterband taucht in ein Marinadebecken ab und fördert die Portionen in die Marinade. Das Oberband drückt die Portionen in die Marinade hinein und gewährleistet den allseitigen Marinadenauftrag.

Die bereits bekannten Marinieranlagen haben den Nachteil, dass sie sehr gross und aufwändig sind. Sie verursachen durch grosse Pumpen und durch einen hohen technischen Aufwand für die Transportbänder eine starke Lufteinrührung in der Marinade, was bei der nachfolgenden Vakuum-Verpackung zum "Aufkochen der Marinade" führt.

Der zweite grosse Nachteil ist, dass diese grossen Marinadebecken sehr aufwändig zu reinigen sind und man während der Produktion die Marinade nur sehr schwer wechseln kann. Zudem geht sehr viel teure Marinade (zumindest prozentual betrachtet) beim Reinigen verloren, insbesondere dann, wenn man nur kleine Fleischmengen verarbeitet.

Durch das ständige Durchführen von Lebensmittelportionen durch diese Tauchbäder kommt es zu einer Verunreinigung der Marinade mit Produktbestandteilen (z.B. Fleischsaft, Stückchen), wodurch eine gleich bleibende Qualität der Marinade während des gesamten Produktionszeitraumes nicht gewährleistet ist.

Die üblicherweise zum Marinieren von Frischfleisch eingesetzten Ölprodukte sind bei den üblichen Verarbeitungs- und Gebrauchstemperaturen (ca. 15-25 °C) üblicherweise flüssig, manchmal sogar dünnflüssig. Manche derartige Öle verbleiben selbst unter dem Gefrierpunkt noch zumindest zähflüssig oder weisen eine weiche Konsistenz auf.

Vorrichtungen zum Auftragen von Überzügen (auch "Toppings" genannt), die diese Probleme umgehen wollen, sind bereits im Stand der Technik bekannt.

So offenbart beispielsweise die DE 1 001 734.6 eine Vorrichtung zum Marinieren von Lebensmitteln, insbesondere von scheibenförmigen und/oder flachen Lebensmitteln wie scheibenförmigen Fleischportionen und/oder zum Auftragen von Flüssigkeiten auf die Lebensmittel, und zwar mittels eines Tauchbadverfahrens, mit folgenden Merkmalen: die Vorrichtung weist ein Marinadebecken und ein umlaufendes Unterband auf, welches von einer Einlauf- zu einer Abgabeseite oberhalb der Füllstandshöhe im Marinadebecken über eine dazwischen befindliche, in das Marinadebecken eintauchende, Tauchzone antreibbar ist, wobei eine Andrücktrommel vorgesehen ist.

Auch hier kommt es zu einem allseitigen Auftrag der Marinade.

Die europäische Patentschrift EP 1 514 483 A1 beschreibt ein Verfahren zum Auftragen einer viskosen Flüssigkeit auf stückige Lebensmittel mittels einer Auftragswalze. Hierbei wird die Zusammensetzung direkt aus dem Vorratsbehälter auf die Auftragswalze aufgebracht, wobei die Menge der aufgetragenen Marinade durch die Oberflächenstruktur der Auftragswalze und die Fördergeschwindigkeit des Lebensmittels beeinflusst wird. Eine Egalisierung der Schicht auf der Auftragswalze durch eine vorgeschaltete Übergabewalze mit variablem Abstand ist nicht gegeben. Weiterer Schwerpunkt dieser Erfindung liegt im Einmassieren der würzenden Zutaten in die Lebensmittelportionen, wobei durch flexible Auftragswalzen ein gleichmäßiges Einbringen erreicht werden soll. Die Erfindung beschreibt weiterhin eine Lösung zum beidseitigen Auftragen der Würzzusammensetzung durch Wenden der Lebensmittelportionen.

Bei der Internationalen Patentanmeldung WO 01/62107 A1 wird das Aufbringen einer Würzmischung mit hohem Salzgehalt beschrieben, die ebenso wie bei den US amerikanischen Patentschriften auf eine Verbesserung der sensorischen Eigenschaften hin abzielt. Hierbei wird eine Zusammensetzung, die sich durch einen ungewöhnlich hohen Salzgehalt aufweist, mittels Sprüh- oder Tauchverfahren auf das stückige Lebensmittel aufgebracht, um einen allseitigen Auftrag zu ermöglichen. Eine Einstellung der Fettzusammensetzung auf eine Aushärtung bei ≤ 0 °C ist nicht gegeben, die Würzzusammensetzung spielt keine Rolle bei der Handhabung der Fertigprodukte vor der Zubereitung.

Es existieren aber auch unterschiedlichste Systeme zum Auftragen von Toppings, die eine hohe Viskosität aufweisen. Diese werden in der Regel über Dispenser auf das Produkt dosiert. Diese Dispenser können spezielle Dosierköpfe an Füllmaschinen oder sonstigen Pumpen sein.

Auch hier erfolgt, wie überall im Stand der Technik, ein beidseitiger Auftrag des Überzugsmaterials auf das Fleischprodukt.

Die im Stand der Technik offenbarten Würzölzusammensetzungen und Vorrichtungen zu ihrem Auftrag - gleichgültig ob sie eine hohe oder niedrige Viskosität aufweisen - haben den Nachteil, dass die mit der Zusammensetzung überzogenen Fleischprodukte nach Einfrieren und Stapeln aneinander festfrieren, so dass die Produkte nicht einzeln entnehmbar sind.

Der vorliegenden Erfindung liegen somit die Aufgaben zugrunde, einen Überzug für Fleischprodukte auf Ölbasis bereitzustellen, der auch nach dem Einfrieren so stabil ist, dass das aufeinander gestapelte Produkt nicht aneinander festfriert und zudem bei der Zubereitung durch den Endverbraucher ein bestimmtes Geschmacksprofil freisetzt, sowie die Erscheinung/Präsentation des Produktes verbessert.

Diese Aufgaben werden erfindungsgemäß durch die in den Ansprüchen 1, 7, 8 und 11 angegebenen Merkmale gelöst. Vorteilhafte Ausgestaltungen der Erfindung sind in den Unteransprüchen angegeben.

Diese Aufgaben werden durch Bereitstellung eines Lebensmittels (Fleischerzeugnis), das einseitig einen gleichmäßig dicken und gewichtsgenauen, das komplette Produkt bedeckenden Überzug erhält, welcher im gefrorenen Zustand nicht an einem weiteren Fleischprodukt festfriert, und so das Produkt einzeln entnehmbar macht, gelöst.

Die erfindungsgemässe Vorrichtung zeichnet sich durch verschiedene überraschende und deutliche Vorteile gegenüber dem Stand der Technik aufweisende Merkmale aus.

Zudem kann die erfindungsgemässe Vorrichtung sehr kompakt und klein aufgebaut werden. Sie benötigt nur wenig Zusammensetzung für eine einwandfreie Funktion (wie dies z.B. in einem Tauchbadverfahren des Stands der Technik nicht der Fall ist). Bei der erfindungsgemäßen Vorrichtung ist zudem durch ein ständiges Umpumpen der Marinade ein kontinuierliches Filtern möglich, ein Absetzen von dispergierten Partikeln in der Ölzusammensetzung wird vermieden. Damit werden die dem Stand der Technik eigenen Nachteile überwunden, d.h., dass es durch das ständige Durchführen von Lebensmittelportionen durch Tauchbäder zu einer Verunreinigung der Marinade mit Produktbestandteilen (z.B. Fleischsaft, Stückchen) kommt, wodurch eine gleich bleibende Qualität der Marinade während des gesamten Produktionszeitraumes nicht gewährleistet ist.

Der Erfindung lag das Problem zugrunde, ein Verfahren zu entwickeln, mit dessen Hilfe ein einseitiges Auftragen einer Würzöl-Zusammensetzung möglich ist, das einen gleichmäßigen, gewichtsgenauen Auftrag erlaubt und gleichzeitig nach dem Gefrieren der Fertigware fest/stabil genug ist, so dass das weitere Handling/Stapeln möglich ist, ohne dass das Produkt aneinander gefriert. Hierzu muss die Verarbeitungstemperatur des Öles so niedrig sein, dass ein sicheres Arbeiten bei offenen Systemen möglich ist. Die Viskosität des Öles darf bei Verarbeitungstemperatur nicht zu hoch oder niedrig sein, um einen gleichmäßigen einseitigen Auftrag zu ermöglichen.

Um die gewünschten Prozesseigenschaften zu erhalten war es erforderlich, den Schmelzpunkt des Öles soweit ab zu senken, dass das Öl im gefrorenen Zustand vollständig ausgehärtet und nicht mehr weich ist. Dies wurde beispielsweise durch die Verwendung eines Gemisches aus gehärtetem Raps- und Palmkernöl erreicht, dessen Schmelzpunkt auf 17° C eingestellt wurde, so das die weitere Verwendung in offenen Systemen möglich ist, ohne Verbrennungsschutzmaßnahmen ergreifen zu müssen.

Zum Aufbringen von Toppings und Gewürzölen existieren bereits unterschiedlichste Systeme, wie oben erwähnt. So werden Toppings, die eine hohe Viskosität haben, in der Regel über Dispenser auf das Produkt dosiert. Diese Dispenser können spezielle Dosierköpfe an Füllmaschinen oder sonstigen Punpen sein. Gewürzöle werden in der Regel durch kurzes tumbeln oder unter Verwendung von Tauchbädern, durch die das Produkt läuft aufgetragen, oder auf das Produkt gegossen. Diese Systeme eignen sich für niedrige Viskositäten.

Da die einen Systeme speziell zum Aufbringen von Toppings mit hohen Viskositäten und Festbestandteilen sind, die auf der Oberfläche einseitig aufgebracht werden können, jedoch nicht für halbflüssige Aufträge und die anderen vorhandenen Systeme halbflüssige und flüssige Schichten auftragen lassen, jedoch nicht nur einseitig, ohne das der Auftrag verläuft, musste für die gewichtsgenaue Auftragung von halbflüssigen Medien eine Vorrichtung entwickelt werden, die dies erlaubt.

Die vorliegende Erfindung betrifft insbesondere folgende Aspekte und Ausführungsformen:

Gemäß eines ersten Aspektes betrifft die Erfindung ein Verfahren zum einseitigen Auftragen eines Überzugs auf vorgeformte, im wesentlichen flache oder scheibenförmige Fleischprodukte, das die folgenden Schritte umfasst:
a) Bereitstellen eines zu überziehenden vorgeformten Fleischproduktes und einer Zusammensetzung wie unten definiert; und
b) einseitiges Auftragen der Zusammensetzung auf das Fleischprodukt.

Weiterhin umfasst die vorliegende Erfindung ein Verfahren zur Herstellung und Lagerung tiefgefrorener Fleischprodukte, das die folgenden Schritte umfasst:
a) Bereitstellen eines zu überziehenden vorgeformten Fleischproduktes und einer Zusammensetzung wie unten definiert;
b) einseitiges Auftragen der Zusammensetzung auf das Fleischprodukt;
c) Einfrieren der Fleischprodukte; und
d) Anordnen der tiefgefrorenen, beschichteten Fleischprodukte in einem geeigneten Behälter.

Gemäß einer bevorzugten Ausführungsform wird die Zusammensetzung vor dem Auftragen auf die Fleischprodukte auf ihre Schmelztemperatur vortemperiert. Hierdurch wird sichergestellt, dass die Zusammensetzung die ihr eigenen Eigenschaften optimal entfalten kann, d.h. in einem zum einseitigen Auftragen auf Fleischprodukte optimalen Zustand vorliegt.

Das mit der erfindungsgemäßen Zusammensetzung beschichtete Produkt wird dann auf ≤ 0°C, vorzugsweise - 10 bis -20°C, am meisten bevorzugt auf-18°C tiefgefroren.

Beispielsweise wird die vortemperierte Zusammensetzung bei 17°C (halbflüssig) in den Vorratsbehälter der Maschine gefüllt. Über einen Schlitz fließt das Gewürzöl gleichmäßig auf eine darunter liegende Walze.

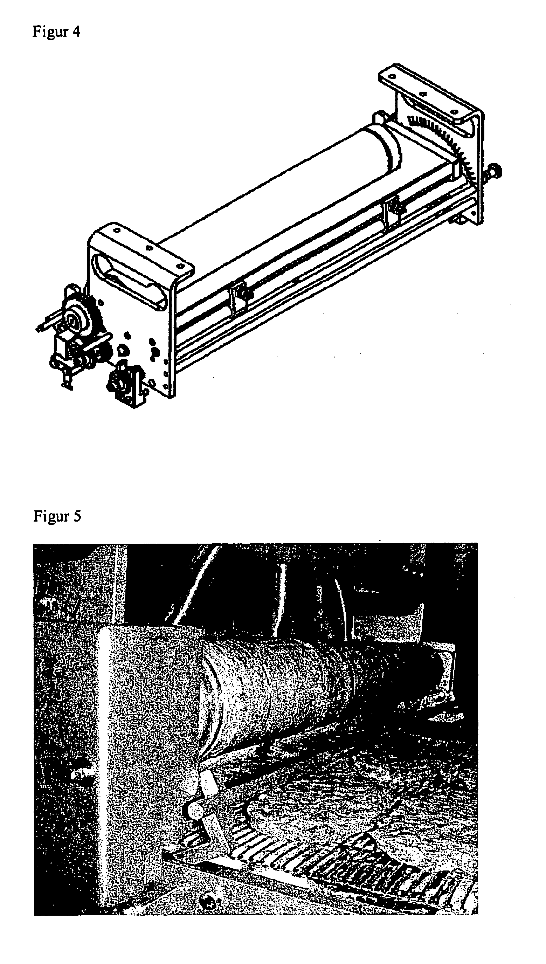

In einer bevorzugten Ausführungsform weist die Vorrichtung zwei Vorratsbehälter auf: einen ersten, größeren Vorratsbehälter, der sich neben der Vorrichtung befindet und wahlweise mit einer Temperierungseinrichtung versehen ist und einen zweiten, kleineren Behälter, der direkt über der ersten Walze angeordnet ist. Dieser zweite, kleinere Vorratsbehälter ist in Fig. 5, oben zu sehen. Von ihm gehen 3 Rohre aus, durch die die Zusammensetzung auf die erste Walze aufgebracht wird. Der zweite Vorratsbehälter weist in der Regel ein kleineres Volumen auf und dient als Puffer zwischen den Walzen und dem großen Vorratsbehälter. Die Zusammensetzung wird durch eine Pumpe vom ersten zum zweiten Vorratsbehälter befördert.

Die Dicke der Schicht die auf die Walze übertragen wird, kann durch Veränderung des Abstands zwischen dem (kleinen) Vorratsbehälter und der ersten Walze eingestellt werden. Ist der Abstand der Walze zum Vorratsbehälter größer, wird eine dickere Schicht aufgetragen. Wird die Walze dichter (höher) an den Schlitz gestellt, ist die Schichtdicke dünner. Weitere Einstellungsmöglichkeiten der Schichtdicke bestehen in der Veränderung des Abstandes von der Übergabe- an die Auftragswalze.

Diese Walze übergibt das Gewürzöl an eine 2. rotierende Walze, unter die das Produkt läuft. Die 2. rotierende Walze bringt dann eine gleichmäßige Schicht des Gewürzöles auf das Produkt auf. Durch die Höheneinstellungen der Walzen kann der Auftrag in der gewünschten Dicke, gewichtsgenau und gleichmäßig auf das Produkt aufgetragen werden.

Gemäß einem zweiten Aspekt stellt die vorliegende Erfindung eine halbflüssige Zusammensetzung auf Ölbasis zum Überziehen von Fleischprodukten bereit, die Folgendes umfasst:
a) ein Öl oder ein Gemisch von Ölen mit einem Schmelzpunkt von 15 bis 25°C, das bei einer Temperatur ≤ 0°C in ausgehärtetem Zustand vorliegt;
b) einen oder mehrere weitere Zusätze zum Marinieren.

Gemäß einer bevorzugten Ausführungsform weist die Ölzusammensetzung der Erfindung ebenfalls einen Schmelzbereich von 15-25°C auf. Mit anderen Worten beeinflussen die weiteren Zusätze (siehe unten) den Schmelzpunkt der Zusammensetzung nicht. Dieser wird in der Regel alleine durch den Öl (Fett)-bestandteil der Zusammensetzung bestimmt. Der Schmelzpunkt wird also nur über die chemische Struktur des eingesetzten Fettes bestimmt. Andere Zusätze in der Zusammensetzung (Kräuter) beeinflussen den Schmelzpunkt nicht.

Lediglich die Viskosität (Fließverhalten) und der Gefrierpunkt werden durch einen erhöhten Anteil an Feststoffen (Kräutern, Salzen) verändert.

Gemäß einem dritten Aspekt betrifft die vorliegende Erfindung eine Vorrichtung zur Durchführung des vorher erläuterten Verfahrens, mit:
- einem Vorratsbehälter, welcher die wie vorher definierte Zusammensetzung enthält und welcher an seinem Boden eine oder mehrere Öffnungen aufweist, über den (die) die bevorratete Zusammensetzung ausfließen kann;
- einer ersten Walze, welche unter dem Vorratsbehälter angeordnet ist, die die aus dem Vorratsbehälter ausfließende Zusammensetzung aufnimmt und die aufgenommene Zusammensetzung auf eine unter der ersten Walze angeordnete zweite Walze überträgt; und
- einer zweiten Walze, welche die ihr von der ersten Walze übertragene Zusammensetzung auf das Fleischprodukt aufträgt.

Der Abstand der ersten Walze zur zweiten Walze ist vorzugsweise einstellbar. Je größer der Abstand der beiden Walzen eingestellt wird, desto weniger der erfindungsgemäßen Zusammensetzung wird von der ersten Walze auf die zweite Walze und damit auf die Fleischstücke übertragen. Wie in Fig. 5 ersichtlich ist, kann der Abstand der Walzen über die Wahl der Position für die erste Walze (siehe oben links in der Abbildung) eingestellt werden. Die Walzen werden bei der Durchführung des Verfahrens zueinander gegenläufig betrieben.

Vorzugsweise ist auch der Abstand der ersten Walze zum Vorratsbehälter einstellbar (siehe oben).

Gemäß Fig. 5 erfolgt die Übertragung der erfindungsgemäßen Zusammensetzung aus dem (kleinen) Vorratsbehälter über drei Stutzen auf die erste Walze. Der Vorratsbehälter kann beispielsweise oberhalb der ersten Walze angeordnet sein. Alternativ kann er auch räumlich von der Walze getrennt sein, z.B. neben der Vorrichtung angeordnet sein. In letzterem Fall übertragt eine Pumpe (nicht gezeigt) die erfindungsgemäße Zusammensetzung mittels eines oder mehrerer Rohre auf die erste Walze. Wie bereits vorher angesprochen, können auch ein größerer und ein kleinerer Vorratsbehälter vorgesehen sein (wie in der Ausführungsform in Fig. 5).

Die erfindungsgemäße Vorrichtung umfasst vorzugsweise weiterhin Mittel zum Einfrieren der beschichteten Fleischprodukte, beispielsweise Düsen, über welche flüssiger Stickstoff zuführbar ist.

Wie bereits oben erwähnt, enthält der Vorratsbehälter vorzugsweise eine Einrichtung zum Temperieren der Zusammensetzung.

Gemäß einer bevorzugten Ausführungsform weist die Zusammensetzung einen Schmelzpunkt von 16-19°C, besonders bevorzugt ungefähr 17°C auf. Dieser Temperaturbereich hat sich als besonders vorteilhaft herausgestellt, da eine solche Zusammensetzung bei den üblichen Produktionstemperaturen eine creme- oder butterartige Konsistenz aufweist. Diese Konsistenz ermöglicht dann eine genaue, auf eine Seite des Fleischproduktes beschränkte und in ihrer Dicke variierbare Auftragung der Zusammensetzung.

Wie oben angesprochen, umfasst die Zusammensetzung üblicherweise würzende Zusätze, Aromen, Farbstoffe etc. wie sie üblicherweise in Marinaden eingesetzt werden. Siehe hierzu beispielsweise die in Tab.1 aufgeführten Zusätze (natürlicher Pfefferextrakt, natürliches Butteraroma (Trägerstoff: Molkenpulver), naturidentische Aromastoffe (Maltodextrin, Stabilisator: 414, Geschmacksverstärker: Maltol, Säuerungsmittel: E260), Gewürze (Paprika, Sellerie, schwarzer Pfeffer); Salz; Gewürzextrakte (Rosmarinextrakt), Aroma (natürliches Vanillearoma). Weiterhin können Emulgatoren und Antioxidantien eingesetzt werden.

Gemäß einer bevorzugten Ausführungsfonn ist der Ölbestandteil ein Gemisch aus Raps- und Palmkernöl.

Die Erfindung wird nachfolgend durch die beigefügten Abbildungen und Figuren sowie durch Ausführungsbeispiele veranschaulicht.

Die Figuren zeigen folgendes:

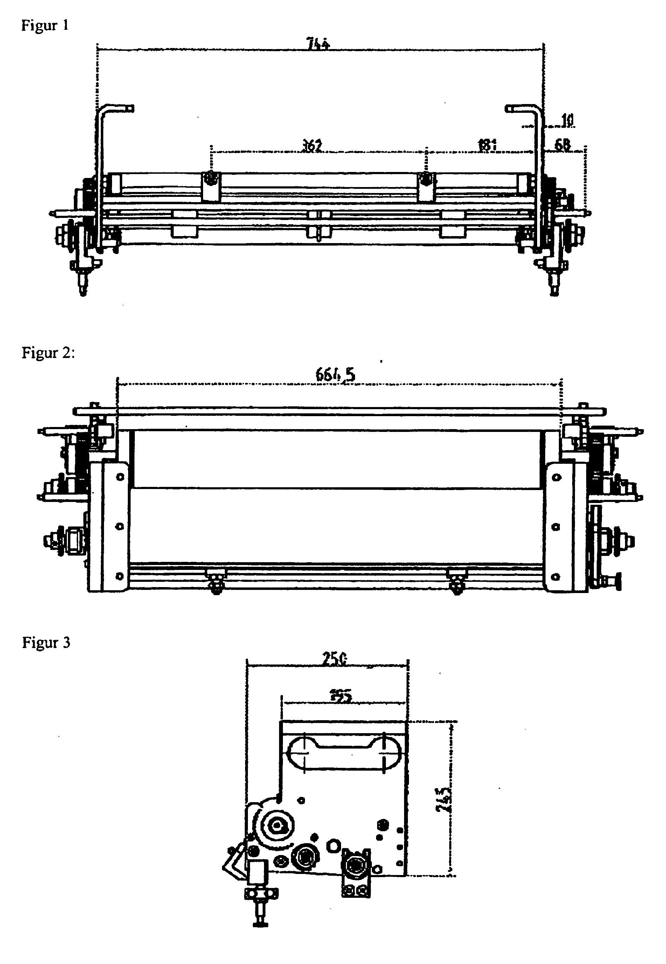

- Figur 1: zeigt eine Rückansicht einer Ausführungsform der erfindungsgemäßen Vorrichtung, wobei der Vorratsbehälter für die erfindungsgemäße Zusammensetzung nicht dargestellt ist.
- Figur 2: zeigt eine Draufsicht auf eine Ausführungsform der erfindungsgemäßen Vorrichtung.
- Figur 3: zeigt eine Seitenansicht einer Ausführungsform der erfindungsgemäßen Vorrichtung.
- Figur 4: zeigt eine perspektivische Darstellung der erfindungsgemäßen Vorrichtung,
- Figur 5: veranschaulicht die Vorrichtung und den Verfahrensablauf anhand einer bevorzugten Ausführungsform.

In Fig. 5 ist klar ersichtlich, dass die erste Walze (große Walze im Vordergrund) die aus dem Vorratsbehälter ausfließende bzw. herausgepumpte Zusammensetzung aufnimmt und auf die zweite Walze überträgt. Die zweite Walze ist unter der ersten Walze angeordnet, wobei die erste Walze und die zweite Walze derart angeordnet sind, dass sich ihre beiden Achsen nicht in einer gemeinsamen vertikalen Ebene befinden, so dass die erfindungsgemäße Zusammensetzung ohne Verlust von der ersten Walze auf die zweite Walze übertragbar ist. Vorzugsweise ist der Durchmesser der zweiten Walze deutlich kleiner als der Durchmesser der ersten Walze.

Wie in Figur 5 zu sehen ist, handelt es sich bei der erfindungsgemäßen Zusammensetzung um ein halbflüssiges Produkt. Das Produkt weist eine cremeartige Beschaffenheit und damit eine gegenüber flüssigen Ölen vergleichsweise hohe Viskosität auf. Die Zusammensetzung wird über die zweite Walze auf die über eine Fördervorrichtung (Stabgeflechtgurt) zugeführten, vorgeformten Fleischstücke übertragen, die dann im weiteren Verlauf des Prozesses schocktiefgefroren und in geeigneter Weise gestapelt werden, um sie somit zur Verpackung und Lagerung geeignet zu machen.

Die einzelnen Fleischstücke sind im tiefgefrorenen Zustand, obgleich sie nicht durch Kunststoff, Papier oder sonstige Zwischenschichten voneinander getrennt sind, leicht entnehmbar, da sie auch im tiefgefrorenen Zustand voneinander trennbar sind und nicht aneinander haften.

Somit kann der zeit- und kostenintensive Einsatz bzw. die Einbringung von Trennmaterialien vermieden werden.

### Beispiele:

Eine bevorzugte Ausführungsform der Zusammensetzung der Erfindung ist in Tabelle 1 angegeben. Die Inhaltstoffe können jedoch nach Bedarf variiert werden.

Eine bevorzugte Ausführungsform des erfindungsgemäßen Verfahrens wird nunmehr anhand der in Diagramm 1 angegebenen Abläufe eingehender beschrieben:

Das im Verfahren eingesetzte Fleisch wird nach üblichen Kriterien ausgewählt und geprüft. Während der Verarbeitung herrscht in etwa eine Temperatur von 8-10 °C in den Produktionsräumen. Danach wird das Ausgangsmaterial verwolft und/oder geschnitten.

Im nächsten Schritt wird die gegebenenfalls mit einer Lake versetzte und getumbelte Fleischmischung in einem Mischer auf eine Endtemperatur auf-2°C gekühlt. Das Kühlen der Mischung erfolgt, um eine gute Bindung und Formung im nächsten Schritt zu ermöglichen. Endtemperatur: - 2 °C.

Als nächstes folgt das Formen der Fleischmischung mit einer Formmaschine zu einer jeweils erwünschten Form. Fig. 5 zeigt hier erfindungsgemäß gewonnene Formfleischstücke. Das Gewicht der Stücke beträgt beispielsweise ca. 130 g.

In diesem Gewichtsbereich werden ca. 6-8g der erfindungsgemäßen Zusammensetzung dann einseitig auf die Oberfläche der Fleischsstücke aufgewalzt (Angaben über die Zusammensetzung siehe Tab. 1).

Um den gewünschten Auftrag zu erhalten muss die Zusammensetzung auf 17-24 °C erhitzt und auf dieser Temperatur gehalten werden.

Die einseitig mit der Zusammensetzung versehenen Produkte werden dann gefrostet (Gefriertunnel, Gefrierzeit 2-3 min.). Sodann werden die einzelnen gefrorenen (-18°C) Fleischstücke in Kartons (vorzugsweise mit Innenbeutel) gestapelt.

**Tabelle 1:**

| |
|---|
| **Detaillierte Zutatenliste der erfindungsgemäßen Zusammensetzung (inklusive aller Hilfsstoffe):** |
| Raps- und Palmkernöl gehärtet (Schmelzpunkt 17°C; Verfestigungspunkt: ca. 5°C) |
| Gewürze und Kräuter |
| Speisewürze |
| Kochsalz |
| Aromen (u.a. Molkenpulver) |
| Emulgator |
| Antioxidationsmittel |
| Gewürze und Kräuter |

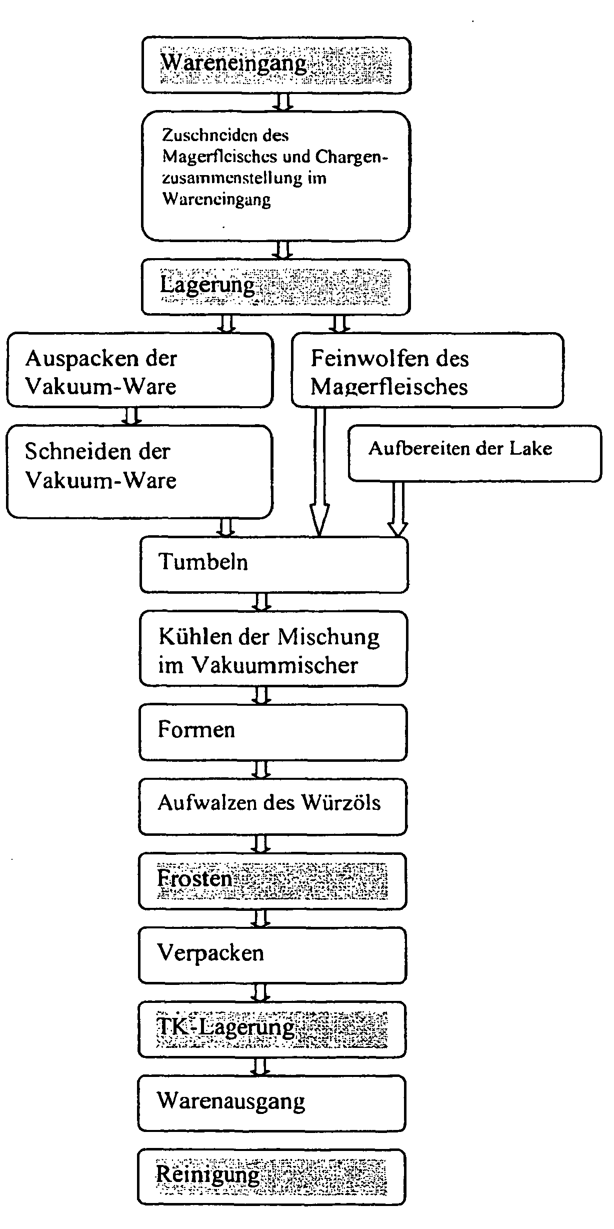

## Patentansprüche

1. Halbflüssige Zusammensetzung auf Ölbasis zum Überziehen von Fleischprodukten, die folgendes umfaßt:
a) ein Öl oder ein Gemisch von Ölen mit einem Schmelzpunkt von 15 bis 25°C, das bei einer Temperatur von ≤ 0°C in ausgehärtetem Zustand vorliegt;
b) einen oder mehrere weitere Zusätze zum Marinieren.

2. Zusammensetzung nach Anspruch 1, die einen Schmelzpunkt von 15-25°C aufweist.

3. Zusammensetzung nach Anspruch 2, die einen Schmelzpunkt von 1.6-19°C aufweist.

4. Zusammensetzung nach Anspruch 2 oder 3, die einen Schmelzpunkt von ungefähr 17°C aufweist.

5. Zusammensetzung nach einem oder mehreren der vorhergehenden Ansprüche, die würzende Zusätze enthält.

6. Zusammensetzung nach einem oder mehreren der vorhergehenden Ansprüche, wobei das Öl ein Gemisch aus Raps- und Palmkernöl umfasst.

7. Verfahren zum Auftragen eines Überzugs auf vorgeformte, im wesentlichen flache Fleischprodukte, das die folgenden Schritte umfasst:
a) Bereitstellen eines zu überziehenden vorgeformten Fleischproduktes und einer Zusammensetzung nach einem oder mehreren der Ansprüche 1-6; und
b) einseitiges Auftragen der Zusammensetzung auf das Fleischprodukt.

8. Verfahren zur Herstellung und Lagerung tiefgefrorener Fleischprodukte, das die folgenden Schritte umfasst:
a) Bereitstellen eines zu überziehenden vorgeformten Fleischproduktes und einer Zusammensetzung nach einem oder mehreren der Ansprüche 1-6;
b) einseitiges Auftragen der Zusammensetzung auf das Fleischprodukt;
c) Einfrieren der Fleischprodukte; und
d) Anordnen der tiefgefrorenen, beschichteten Fleischprodukte in einem geeigneten Behälter.

9. Verfahren nach Anspruch 7 oder 8, wobei die Zusammensetzung vor dem Auftragen auf die Fleischprodukte auf ihre Schmelztemperatur vortemperiert wird.

10. Verfahren nach einem der Ansprüche 7-9, wobei das Produkt auf < 0°C, vorzugsweise ungefähr-18°C tiefgefroren wird.

11. Vorrichtung zur Durchführung des Verfahrens nach einem der Ansprüche 7 bis 10, mit:
- einem Vorratsbehälter, welcher die Zusammensetzung nach einem der Ansprüche 1 bis 6 bevorratet und welcher an seinem Boden eine oder mehrere Öffnungen aufweist, über den (die) die bevorratete Zusammensetzung ausfließen kann;
- einer ersten Walze, welche unter dem Vorratsbehälter angeordnet ist, die aus dem Vorratsbehälter ausfließende Zusammensetzung aufnimmt und die aufgenommene Zusammensetzung auf eine unter der ersten Walze angeordneten zweite Walze überträgt; und
- mit der zweiten Walze, welche die ihr von der ersten Walze übertragene Zusammensetzung auf das Fleischprodukt aufträgt.

12. Vorrichtung nach Anspruch 11, wobei der Abstand der ersten zur zweiten Walze einstellbar ist.

13. Vorrichtung nach Anspruch 11 oder 12, wobei der Abstand der ersten Walze zum Vorratsbehälter einstellbar ist.

14. Vorrichtung nach einem der Ansprüche 11-13, wobei die Vorrichtung weiterhin ein Mittel zum Einfrieren der beschichteten Fleischprodukte enthält.

15. Vorrichtung nach Anspruch 14, wobei das Mittel zum Einfrieren Düsen zur Zufuhr von flüssigem Stickstoff umfasst.

16. Vorrichtung nach einem der Ansprüche 10-15, wobei der Vorratsbehälter eine Einrichtung zum Temperieren der Zusammensetzung aufweist.

## Claims

1. An oil-based, semi-liquid composition for coating meat products, comprising:
a) an oil or a mixture of oils having a melting point of 15-25°C and present in hardened form at temperatures ≤ 0°C;
b) one or more further marinading additives.

2. Composition according to claim 1 having a melting point of 15-25°C.

3. Composition according to claim 2 having a melting point of 16-19°C.

4. Composition according to claim 2 or 3 having a melting point of 17°C approximately.

5. Composition according to one or more of the preceding claims containing seasoning additives.

6. Composition according to one or more of the preceding claims, wherein the oil comprises a mixture of rapeseed and palm kernel oils.

7. Method for applying a coating to preformed, essentially flat meat products, involving the following steps:
a) providing a preformed meat product to be coated and a composition according to one or more of the claims 1-6; and
b) applying the composition to one side of the meat product.

8. Method for producing and storing deep-frozen meat products, involving the following steps:
a) providing a preformed meat product to be coated and a composition according to one or more of the claims 1-6;
b) applying the composition to one side of the meat product;
c) freezing the meat products; and
d) placing the deep-frozen, coated meat products in a suitable container.

9. Method according to claim 7 or 8, wherein the composition is first brought to its melting temperature prior to application to the meat products.

10. Method according to one of claims 7-9, wherein the product is deep-frozen to < 0°C, preferably -18°C approximately.

11. Apparatus for carrying out the method according to one of the claims 7 to 10, comprising:
- a storage container storing the composition according to one of claims 1 to 6 and having one or more openings in the base through which the stored composition can flow out;
- a first roller, located below the storage container, which takes up the composition flowing out of the storage container and transfers the taken-up composition onto a second roller located below the first roller; and
- the second roller which applies, to the meat product, the composition transferred onto it by the first roller.

12. Apparatus according to claim 11, wherein the distance from the first to the second roller is adjustable.

13. Apparatus according to claim 11 or 12, wherein the distance from the first roller to the
storage container is adjustable.

14. Apparatus according to one of the claims 11-13, wherein the apparatus further contains a means for freezing the coated meat products.

15. Apparatus according to claim 14, wherein the means for freezing comprises nozzles for delivering liquid nitrogen.

16. Apparatus according to one of the claims 10-15, wherein the storage container has a facility for bringing the composition to the correct temperature.

## Revendications

1. Composition mi-liquide à base d'huile pour l'enrobage de produits de viande qui comprend ce qui suit :
a) une huile ou un mélange d'huiles avec un point de fusion entre 15 et 25 °C, qui, à une température ≤ 0 °C, se présente à l'état durci ;
b) un ou plusieurs autres additifs pour la marinade.

2. Composition selon la revendication 1 qui présente un point de fusion de 15-25 °C.

3. Composition selon la revendication 2 qui présente un point de fusion de 16-19 °C.

4. Composition selon la revendication 2 ou 3 qui présente un point de fusion d'environ 17 °C.

5. Composition selon l'une ou plusieurs des revendications précédentes qui contient des additifs épicés.

6. Composition selon l'une ou plusieurs des revendications précédentes, l'huile étant composée d'un mélange d'huile de colza et d'huile de palme.

7. Procédé de réalisation d'un enrobage de produits de viande préformés, principalement plans, qui comporte les étapes suivantes :
a) préparation d'un produit de viande préformé à enrober et d'une composition selon l'une ou plusieurs des revendications 1-6 ; et
b) enrobage d'un côté du produit de viande avec la composition.

8. Procédé de fabrication et de stockage de produits de viande surgelés qui comprend les étapes suivantes :
a) préparation d'un produit de viande préformé à enrober et d'une composition selon l'une ou plusieurs des revendications 1-6 ;
b) enrobage d'un côté du produit de viande avec la composition ;
c) surgélation des produits de viande ; et
d) rangement des produits de viande surgelés, enrobés dans un récipient approprié.

9. Procédé selon les revendications 7 ou 8, la composition étant préalablement amenée à température constante, à sa température de fusion, avant d'enrober les produits de viande.

10. Procédé selon l'une des revendications 7-9, le produit étant à une température > 0 °C, de préférence surgelé à environ - 18 °C.

11. Dispositif de mise en oeuvre du procédé selon l'une des revendications de 7 à 10 avec :
- un récipient de réserve qui conserve la composition selon l'une des revendications de 1 à 6 et qui présente dans son fond un ou plusieurs orifices par lequel (lesquels) la composition en conserve peut s'écouler ;
- un premier tambour, qui est situé en dessous du récipient de réserve, qui recueille la composition s'écoulant du récipient de réserve et qui transfère la composition recueillie dans un second tambour agencé en dessous du premier tambour ; et
- avec le second tambour, qui enrobe le produit de viande avec la composition transférée vers lui par le premier tambour.

12. Dispositif selon la revendication 11, l'espace entre le premier et le second tambour étant réglable.

13. Dispositif selon les revendications 11 ou 12, l'espace entre le premier tambour et le récipient de réserve étant réglable.

14. Dispositif selon l'une des revendications 11-13 le dispositif contenant en outre un moyen pour surgeler les produits de viande enrobés.

15. Dispositif selon la revendication 14 le moyen pour surgeler présentant des buses pour l'ajout d'azote liquide.

16. Dispositif selon l'une des revendications 10-15, le récipient de réserve présentant une installation pour la conservation à température constante de la composition.
